# EUROPEAN PATENT SPECIFICATION

(11) **EP 0 919 514 B1**
(45) Date of publication and mention of the grant of the patent: **21.09.2005**
(21) Application number: 98122625.1
(22) Date of filing: 27.11.1998
(51) Int. Cl.: B66F 9/075

(54) **Position detecting apparatus for forklifts**
Positionsermittlungsvorrichtung für Gabelstapler
Dispositif de détection de position pour chariots élévateurs à fourches

(30) Priority: 28.11.1997 JP 32875497
(43) Date of publication of application: 02.06.1999
(73) Proprietor: KABUSHIKI KAISHA TOYOTA JIDOSHOKKI, Aichi-ken (JP)
(72) Inventor: Ishikawa, Kazuo, 2 chome, Kariya-shi, Aichi-ken (JP); Fujimori, Hiroyuki, 2 chome, Kariya-shi, Aichi-ken (JP)
(74) Representative: TBK-Patent

(56) References cited:
- GB-A- 2 093 217
- US-A- 3 107 750
- US-A- 4 130 183
- PATENT ABSTRACTS OF JAPAN vol. 001, no. 134 (M-045), 5 November 1977 (1977-11-05) -& JP 52 075757 A (TOYODA AUTOM LOOM WORKS LTD), 25 June 1977 (1977-06-25)

## Description

### TECHNICAL FIELD

The present invention relates to an apparatus for detecting the position of a fork of a fork lift truck according to the preamble of claim 1.

### RELATED BACKGROUND ART

A forklift employs forks, which are supported by a forklift mast, to carry loads. It is important that the position of the forks be detected to guarantee vehicle stability.

A limit switch is often installed in a forklift to detect the position of the forks. The limit switch is actuated depending on whether the forks are located above or below a predetermined position.

A typical limit switch has a body on which an actuating piece, which is moved by external force, and a switch mechanism is arranged. Displacement of the actuating piece moves the switch mechanism and actuates the limit switch. That is, the limit switch is actuated (or de-actuated) when the actuating piece is displaced and de-actuated (or actuated) when the actuating piece returns to its original position. Once a detected body (e.g., forks) enters a certain zone defined either above or below a predetermined position, the actuating piece is kept displaced until the detected body moves out of the zone. In other words, the limit switch is either continuously actuated or continuously de-actuated when detecting the position of the detected body.

In a forklift, the body of the limit switch is fixed to an outer mast. A vertically elongated, plate-like dog for manipulating the actuating piece of the limit switch is fixed to an inner mast. The limit switch and the dog are arranged such that the dog moves the actuating piece to change the state of the limit switch when the forks are located above a predetermined position.

The space between the inner mast and the outer mast is narrow. Thus, the limit switch body cannot be arranged at a location that permits the inner mast to directly manipulate the actuating piece. The inner mast indirectly manipulates the actuating piece with the dog, which is secured to the inner mast. Accordingly, the dog is designed to manipulate the actuating piece of the limit switch appropriately. Such an apparatus is known from US-A-4 130 183, which discloses the preamble of claim 1.

### DISCLOSURE OF THE INVENTION

Accordingly, it is an objective of the present invention to provide a simple and inexpensive position detecting apparatus that directly detects the fork elevation.

To achieve the above objective, the present invention provides an apparatus for detecting a vertical position of a fork of a forklift vehicle according to claim 1.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a cross-sectional plan view showing a position detecting apparatus according to the present invention;
Fig. 2 is a perspective view showing the position detector;
Fig. 3 is a cross-sectional side view showing the position detector;
Fig. 4 is a cross-sectional front view showing the position detector;
Fig. 5 is a diagrammatic side view showing the operation of the position detector;
Fig. 6 is a diagrammatic side view showing the operation of the position detector;
Fig. 7 is a cross-sectional plan view showing the position detector;
Fig. 8 shows a diagrammatic side view showing a lever employed in a further embodiment according to the present invention; and
Fig. 9 shows a diagrammatic side view showing a lever employed in a another embodiment according to the present invention.

### DESCRIPTION OF SPECIAL EMBODIMENT

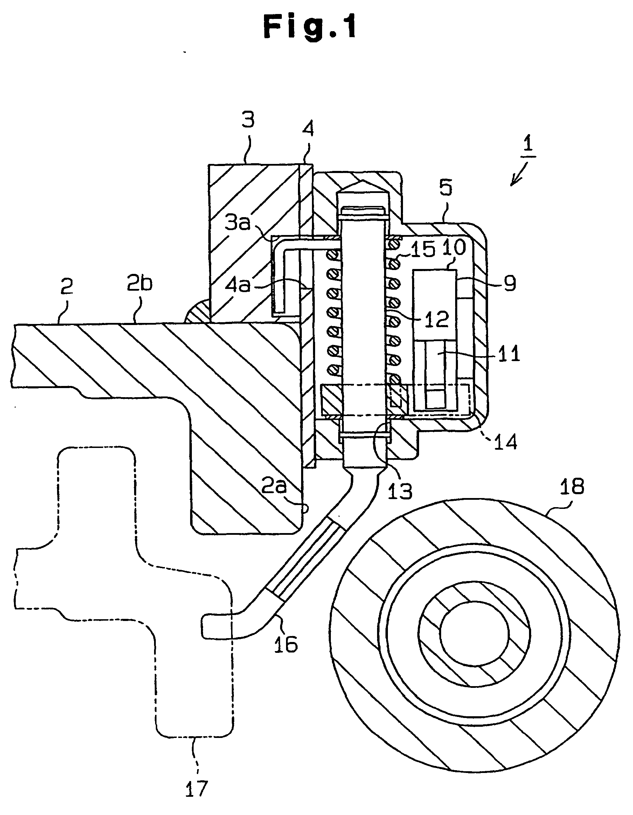

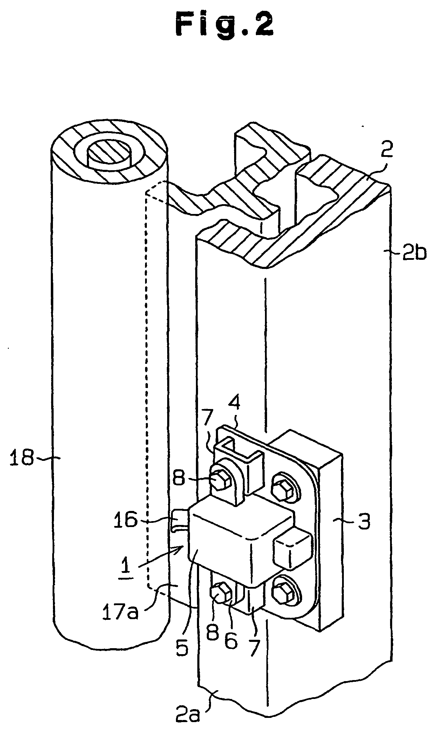

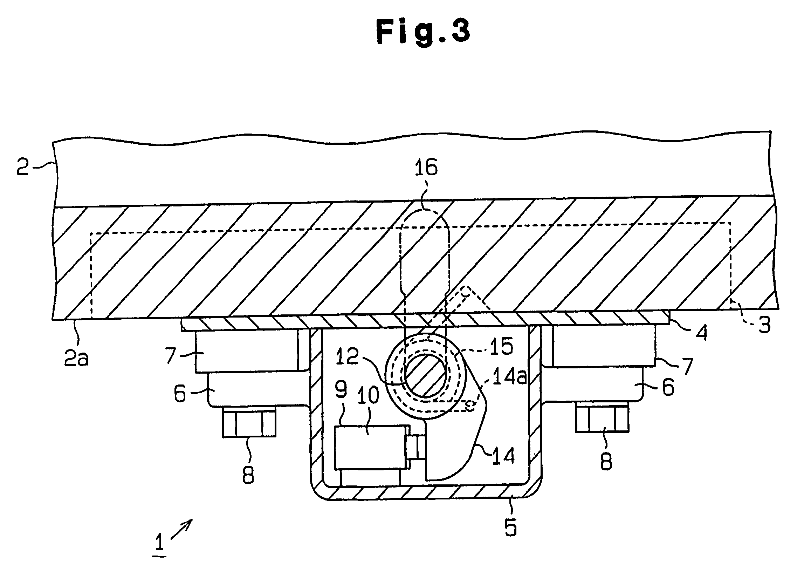

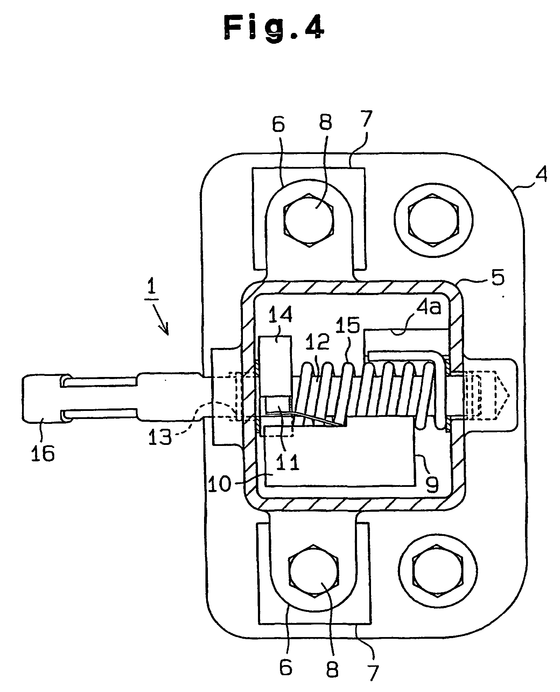

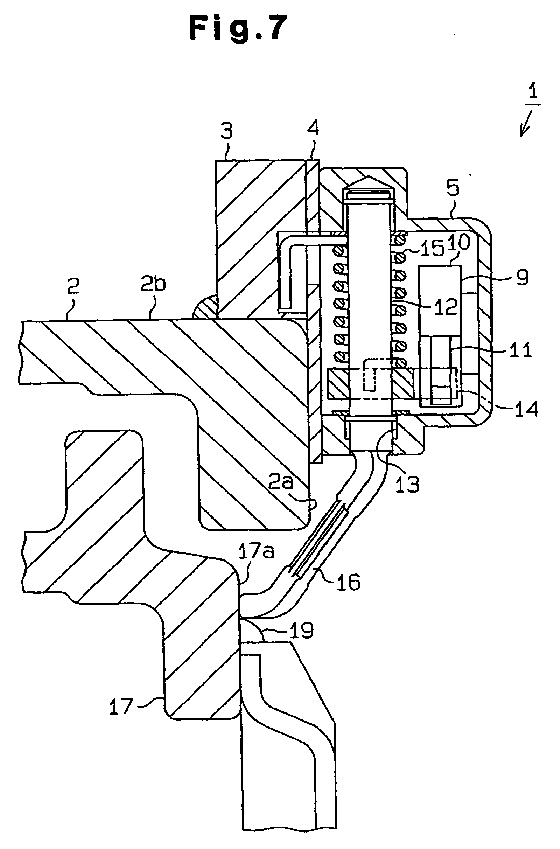

A position detecting apparatus according to the present invention will now be described with reference to Figs. 1 to 7. The position detecting apparatus, or position detector 1, is applied to a forklift. As shown in Fig. 2, a right outer mast 2a of the forklift has a rear surface 2a, which faces the forklift cabin, and a right surface 2b. The position detector 1 is coupled to the rear surface 2a. Loads are handled at the front side of the outer mast 2a. This prevents interference between a load and the position detector 1 and thus prevents the detector 1 from being damaged. A support plate 3 is fixed to the right surface 2b such that it is flush with the rear surface 2a. An attachment plate 4 is fixed to the support plate 3 spanning the rear surface 2a of the outer mast 2 and the support plate 3.

As shown in Figs. 1, 3, and 4, the position detector 1 has a housing 5, which is fixed to the outer mast 2 by the attachment plate 4 and the support plate 3. As shown in Fig. 2, tabs 6, each having a through hole, extend integrally from the top surface and the bottom surface of the housing 5. Each tab 6 is associated with a channel bar 7. The channel bars 7 project from the housing 5 and have threaded holes. A bolt 8 fastens each tab 6 to the associated channel bar 7 to fix the housing 5 to the attachment plate 4.

A microswitch 9 is housed in the housing 5. The microswitch 9 has a body 10, which is fixed to the housing 5, and an arm 11, which projects from the body 10. The body 10 incorporates a switch mechanism (not shown). Manipulation of the arm 11 operates the switch mechanism and actuates the microswitch 9. The arm 11 is located at an actuation position when depressed and is shifted to a de-actuation position by a spring mechanism (not shown) when not pressed. The microswitch 9 is open when the arm 11 is in the de-actuation position and is closed when the arm 11 is in the actuation position. In other words, the microswitch 9 is a normally open type switch.

A shaft 12 extends in the lateral direction of the forklift in the housing 5 and projects outward from the housing 5 through a bore 13. The shaft 12 is supported such that it is pivotal about its axis and is axially movable within a predetermined range. An actuating piece 14 pivots integrally with the shaft 12 to press the arm 11 and actuate the microswitch 9.

Pivoting of the shaft 12 presses the actuating piece 14 against the arm 11. The actuating piece 14 is urged toward the arm 11 by a torsion coil spring 15, which is fitted to the shaft 12. The torsion coil spring 15 also urges the shaft 12 axially to project outward from the bore 13.

The attachment plate 4 has an opening 4a, which is connected with a cavity 3a defined in the support plate 3. The torsion coil spring 15 has two ends, one of which extends through the opening 4a and is held in the cavity 3a. The other end is engaged with a hooking hole 14a, which is defined in the actuating piece 14, to secure the coil spring 15 to the actuating piece 14.

A lever 16 extends integrally from the shaft 12 toward the inner mast 17. Vertical movement of the inner mast 17 causes the lever 16 to pivot the shaft 12, which actuates or de-actuates the microswitch 9 by means of the actuating piece 14.

A right lift cylinder 18 is located near the outer mast 2. The lever 16 is flat so that it can extend through the narrow space between the outer mast 2 and the lift cylinder 18. The lever 16 has a round end, which decreases the force of the impact when the lever 16 contacts the inner mast 17. The lever end is quenched to harden and enhance its anti-abrasion properties. This prevents wear of the lever 16 when the lever 16 slides against the inner mast 17.

As shown in Figs. 1, 3, and 4, the torsion coil spring 15 rotates the actuating piece 14 to depress the arm 11 with the inner mast 17 when the lever 16 is disengaged.

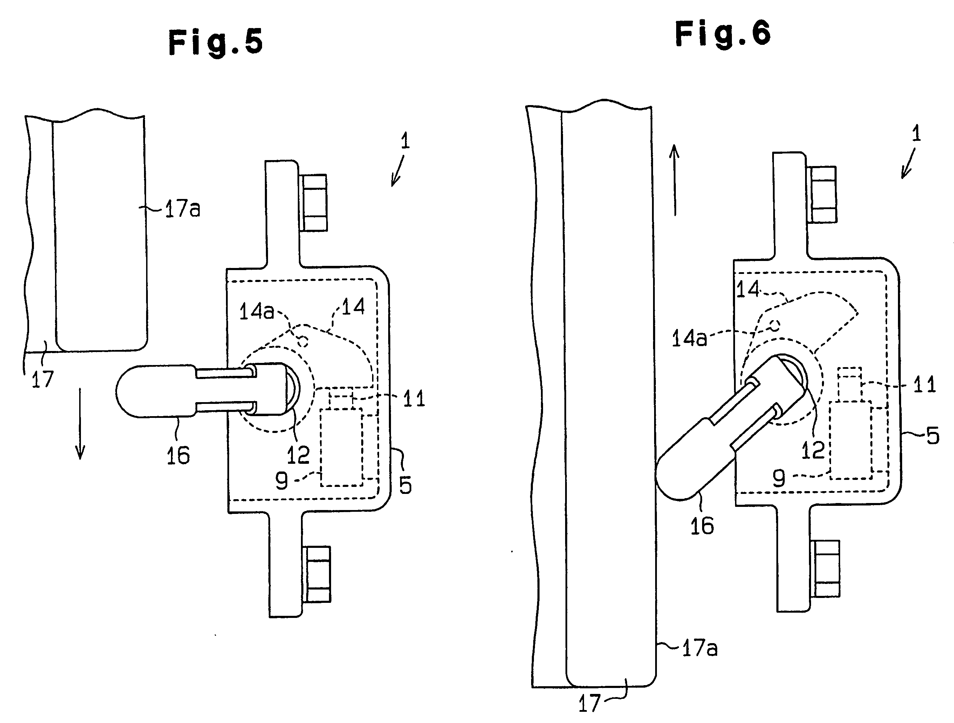

The operation of the position detector 1 will now be described. The position detector 1 is actuated when the inner mast 2 enters a detection zone. The lower end of the detection zone is defined by a predetermined actuating position. The position detector 1 is thus attached to the rear surface 2a of the right outer mast 2 at a location corresponding to the predetermined actuating position. As shown in Fig. 5, the position detector 1 is arranged such that the shaft 12 extends perpendicular to the moving direction of the inner mast 17 and such that the lever 16 intersects the path of the inner mast 17. In Fig. 5, the lever 16 is disengaged, which depresses the arm 11 and closes the microswitch 9.

When the inner mast 17 is lowered from the detection zone, the inner mast 17 pushes and pivots the lever 17 in a counterclockwise direction (as viewed in Fig. 6) for a predetermined angle. In this state, the round end of the lever 16 slides against a right surface 17a of the inner mast 17 as the inner mast 17 moves.

The pivoting of the lever 17 rotates the shaft 12 against the force of the torsion coil spring 15 in a counterclockwise direction (as viewed in Fig. 6) for a predetermined angle. This causes the actuating piece 14 to move away from the arm 11. As a result, the arm 11 is shifted to the de-actuation position by its internal spring mechanism. In other words, the microswitch 9 is opened. The lever 16 keeps the microswitch 9 in an opened state as long as the lower end of the inner mast 17 is located below the detection zone.

When the inner mast 17 is lifted into the detection zone, the lever 16 disengages from the inner mast 17 and pivots back to its original position. Hence, the microswitch 9 is closed. The lever 16 keeps the microswitch 9 in a closed state as long as the inner mast 17 is located in the detection zone.

Accordingly, when the inner mast 17 enters the detection zone, the position detector 1 directly detects the inner mast 17 by means of the lever 16 and the microswitch 9, which is arranged on the outer mast 2 and separated from the inner mast 17.

The relative distance between the inner mast 17 and the outer mast 2 may vary. However, the torsion coil spring 15 axially moves the shaft 12 to position the lever 16 accordingly. When the lower end of the inner mast 17 is lowered to a position below the detection zone or when a weld 19 is separated from the lever 16, the torsion coil spring 15 axially moves the shaft 12 and returns the lever 16 to its original position. Therefore, forces applied to the lever 16 in the axial direction of the shaft 12 are absorbed by the torsion coil spring 15.

The preferred and illustrated embodiment has the advantages described below.

When a detected body (inner mast 17) is moved to a predetermined position (detection zone), the microswitch 9, which is separated from the detected body, directly detects the detected body by means of the lever 16, which operates the microswitch 9.

The force applied to the lever 16 by the detected body (inner mast 17) in the axial direction of the shaft 12 is absorbed by the torsion coil spring 15, which prevents excessive force from acting on the various components of the position detector 1. Thus, detection of the detected body's vertical position is guaranteed even if the detected body has a rough surface.

The torsion coil spring 15, which is fitted to the shaft 12, urges the actuating piece 14 toward the arm 11 and the shaft 12 axially toward the inner mast 17. Accordingly, a single member functions as an actuating mechanism and an urging mechanism. This decreases the number of components and assembling steps.

It should be apparent to those skilled in the art that the present invention may be embodied in many other specific forms without departing from the scope of the invention. More particularly, the present invention may be embodied as described below.

In the preferred and illustrated embodiment, the position detector 1 is attached to the right outer mast 2. However, the position detector 1 may be attached to the rear surface of a left outer mast as well. Accordingly, the location of the position detector 1 is not limited as long as it does not interfere with the handling of loads.

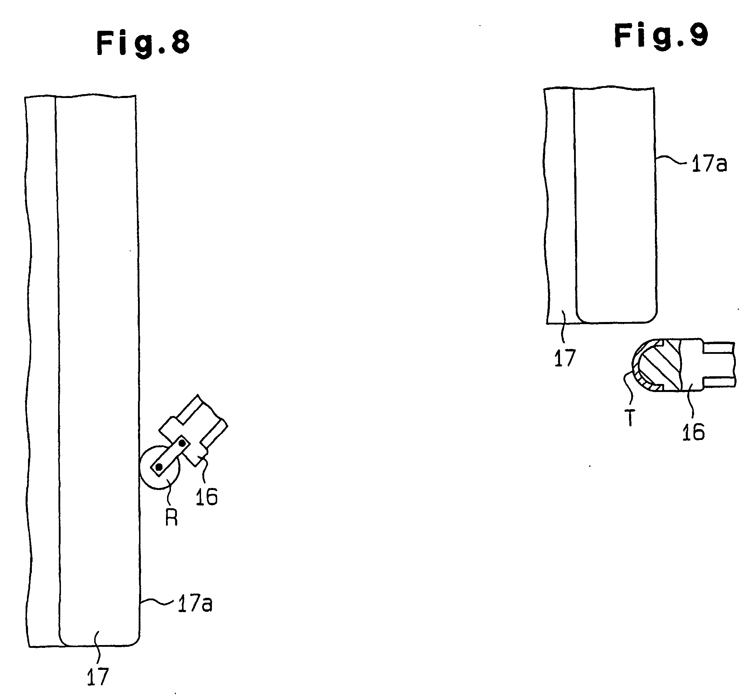

In a further embodiment according to the present invention, a roller R, which contacts and rolls along the detected body, is secured to the distal end of the lever 16, as shown in Fig. 8. In such case, the lever 16 is manipulated smoothly by the detected body.

In another embodiment according to the present invention, a tip T having a high anti-abrasion property may be arranged on the distal end of the lever 16 to slide against the inner mast 17, as shown in Fig. 9.

Therefore, the present examples and embodiments are to be considered as illustrative and not restrictive, and the invention is not to be limited to the details given herein, but may be modified within the scope of the appended claims.

## Claims

1. An apparatus for detecting a vertical position of a fork of a forklift vehicle, the vehicle having a pair of inner masts (17) movable in a path parallel to outer masts (2), the fork being vertically movable in accordance with vertical movement of the inner masts (17), said apparatus comprising
- displacement means (16) that is adapted to be displaced by the inner mast (17) when the inner mast (17) is located in a predetermined vertical region, said displacement means (16) adapted to intersect the path of the inner mast (17), and a switch (9) that is actuated by the displacement means (16),
- a support shaft (12) that supports the displacement means (16) and is rotatable in a predetermined angular range,
- biasing means (15) for biasing the support shaft (12) in a first rotational direction, said support shaft being rotated in a second rotational direction, opposite to the first rotational direction, when the displacement means (16) is engaged by the inner mast, and
- a switch actuator member (14) located on the support shaft (12) and moving integrally with the support shaft (12), wherein said switch actuator member actuates the switch (9) when the support shaft (12) is rotated in the first rotational direction, said switch actuating member (14) de-actuating the switch (9) when the support shaft (12) is rotated in the second rotational direction, **characterized in that** said support shaft (12) is axially movable.

2. The apparatus as set forth in any one of the preceding claims, **characterized in that** said displacement means includes an elongated member (16).

3. The apparatus as set forth in Claim 2, **characterized in that** said elongated member (16) has a distal end portion that engages the inner mast (12).

4. The apparatus as set forth in Claim 3, **characterized in that** said distal end portion is semi-circular.

5. The apparatus as set forth in Claims 3 or 4, **characterized in that** said distal end portion is treated with an anti-wearing process.

6. The apparatus as set forth in any one of Claims 3 to 5, **characterized in that** said distal end portion includes a wear-resistant surface (T).

7. The apparatus as set forth in Claim 3, **characterized in that** said distal end portion has a roller (R) that engages the inner mast (12).

## Patentansprüche

1. Gerät für das Erfassen einer vertikalen Position einer Gabel eines Gabelstaplerfahrzeugs, wobei das Fahrzeug ein Paar Innenmasten (17) hat, die in einem Weg bewegbar sind, der parallel zu Außenmasten (2) ist, wobei die Gabel vertikal verschiebbar gemäß einer Vertikalbewegung der Innenmasten 17 ist, wobei das Gerät folgende Bauteile hat:
Verschiebungseinrichtung (16), die geeignet ist, durch den Innenmast (17) verschoben zu werden, wenn der Innenmast (17) in einer vorbestimmten vertikalen Region gelegen ist, wobei die Verschiebungseinrichtung (16) geeignet ist, den Weg des Innenmasten (17) zu kreuzen, und einen Schalter (9), der durch die Verschiebungseinrichtung (16) betätigt wird,
eine Stützwelle (12), die die Verschiebungseinrichtung (16) abstützt und die in einem vorbestimmten Winkelbereich drehbar ist,
Vorspannungseinrichtung (15) für das Vorspannen der Stützwelle (12) in einer ersten Drehrichtung, wobei die Stützwelle in einer zweiten Drehrichtung gedreht wird, die der ersten Drehrichtung entgegengesetzt ist, wenn die Verschiebungseinrichtung (16) durch den Innenmast im Eingriff ist, und
ein Schaltbetätigungselement (14), das an der Stützwelle (12) gelegen ist und sich einstückig mit der Stützwelle (12) bewegt, wobei das Schaltbetätigungselement den Schalter (9) betätigt, wenn die Stützwelle (12) in die erste Drehrichtung gedreht wird, wobei das Schaltbetätigungselement (14) den Schalter (9) nicht betätigt, wenn die Stützwelle (12) in die zweite Drehrichtung gedreht wird,
**dadurch gekennzeichnet, dass**
die Stützwelle (12) axial verschiebbar ist.

2. Gerät, wie es in einem der vorhergehenden Ansprüche dargelegt ist, **dadurch gekennzeichnet, dass** die Verschiebungseinrichtung ein verlängertes Element (16) hat.

3. Gerät, wie es in Anspruch 2 dargelegt ist, **dadurch gekennzeichnet, dass** das verlängerte Element (16) einen entfernten Endabschnitt hat, der mit dem Innenmast (12) eingreift.

4. Gerät, wie es in Anspruch 2 dargelegt ist, **dadurch gekennzeichnet, dass** der entfernte Endabschnitt halbkreisförmig ist.

5. Gerät, wie es in den Ansprüchen 3 oder 4 dargelegt ist, **dadurch gekennzeichnet, dass** der entfernte Endabschnitt mit einem Anti-Abnutzungsverfahren behandelt worden ist.

6. Gerät, wie es in einem der Ansprüche 3 bis 5 dargelegt ist, **dadurch gekennzeichnet, dass** der entfernte Endabschnitt eine abnützungsresistente Oberfläche (T) hat.

7. Gerät, wie es in Anspruch 3 dargelegt ist, **dadurch gekennzeichnet, dass** der entfernte Endabschnitt eine Rolle (R) hat, die mit dem Innenmast (12) eingreift.

## Revendications

1. Appareil de détection d'une position verticale d'une fourche d'un véhicule de levage à fourche, le véhicule présentant deux mâts internes (17) pouvant se déplacer sur un chemin parallèle aux mâts externes (2), la fourche pouvant se déplacer verticalement conformément au mouvement vertical des mâts internes (17), ledit appareil comprenant
- un moyen de déplacement (16) conçu pour être déplacé par le mât interne (17) lorsque le mât interne (17) est situé dans une région verticale prédéterminée, ledit moyen de déplacement (16) étant conçu pour couper le chemin du mât interne (17), et d'un commutateur (9) qui est activé par le moyen de déplacement (16),
- un arbre support (12) qui supporte le moyen de déplacement (16) et peut pivoter dans une gamme d'angles prédéterminée,
- un moyen d'inclinaison (15) pour incliner l'arbre support (12) dans une première direction de rotation, ledit arbre support étant pivoté dans une seconde direction de rotation, opposée à la première direction de rotation, lorsque le moyen de déplacement (16) est engagé par le mât interne, et
- un élément d'activation du commutateur (14) situé sur l'arbre support (12) et se déplaçant en une seule pièce avec l'arbre support (12), dans lequel ledit élément d'activation du commutateur active le commutateur (9) lorsqu'on fait pivoter l'arbre support (12) dans la première direction de rotation, ledit élément d'activation du commutateur (14) désactivant le commutateur (9) lorsqu'on fait pivoter l'arbre support (12) dans la seconde direction de rotation, **caractérisé en ce que** ledit arbre support (12) peut être déplacé axialement.

2. Appareil tel qu'énoncé dans l'une quelconque des revendications précédentes, **caractérisé en ce que** ledit moyen de déplacement inclut un élément allongé (16).

3. Appareil tel qu'énoncé dans la revendication 2, **caractérisé en ce que** ledit élément allongé (16) présente une partie d'extrémité distale qui s'engage dans le mât interne (12).

4. Appareil tel qu'énoncé dans la revendication 3, **caractérisé en ce que** ladite partie d'extrémité distale est semi-circulaire.

5. Appareil tel qu'énoncé dans les revendications 3 ou 4, **caractérisé en ce que** ladite partie d'extrémité distale est traitée avec un procédé anti-usure.

6. Appareil tel qu'énoncé dans l'une quelconque des revendications 3 à 5, **caractérisé en ce que** ladite partie d'extrémité distale inclut une surface résistante à l'usure (T).

7. Appareil tel qu'énoncé dans la revendication 3, **caractérisé en ce que** ladite partie d'extrémité distale présente un rouleau (R) qui s'engage dans le mât interne (12).
